(19)

Europäisches
Patentamt
European
Patent Office
Office européen
des brevets

(11) **EP 4 361 107 A1**

(12) **EUROPEAN PATENT APPLICATION**

(43) Date of publication:
**01.05.2024 Bulletin 2024/18**

(21) Application number: **23175387.2**

(22) Date of filing: **25.05.2023**

(51) International Patent Classification (IPC):
***C01G 53/00*** (2006.01)      ***H01M 4/525*** (2010.01)

(52) Cooperative Patent Classification (CPC):
**C01G 53/50; H01M 4/525;** C01P 2002/74;
C01P 2004/53; C01P 2004/61; C01P 2004/84;
C01P 2006/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.10.2022 KR 20220138463**

(71) Applicant: **ECOPRO BM CO., LTD.
Cheongju-si, Chungcheongbuk-do 28117 (KR)**

(72) Inventors:
• **CHUN, Yu Gyeong
28116 Chungcheongbuk-do (KR)**

• **CHOI, Moon Ho
28116 Chungcheongbuk-do (KR)**
• **CHOI, Yoon Young
28116 Chungcheongbuk-do (KR)**
• **SHIN, Jong Seung
28116 Chungcheongbuk-do (KR)**
• **GWON, Yong Hwan
28116 Chungcheongbuk-do (KR)**
• **BAE, Jin Ho
28116 Chungcheongbuk-do (KR)**
• **KIM, Ji Won
28116 Chungcheongbuk-do (KR)**
• **KIM, Sang Hyeok
28116 Chungcheongbuk-do (KR)**

(74) Representative: **J A Kemp LLP
80 Turnmill Street
London EC1M 5QU (GB)**

(54) **LITHIUM COMPOSITE OXIDE AND POSITIVE ELECTRODE ACTIVE MATERIAL FOR SECONDARY BATTERY CONTAINING SAME**

(57)     Disclosed is a positive electrode active material including a first lithium composite oxide particle including a secondary particle formed by aggregation of one or more primary particles, and a coating oxide occupying at least a part of at least one of surfaces of the secondary particle, grain boundaries between the primary particles, or surfaces of the primary particles, the positive electrode active material satisfying an equation of $1.3 \leq a/b \leq 3.0$, wherein a represents a max peak intensity at 2theta = 44.75° to 44.80° and b represents a max peak intensity at 2theta = 45.3° to 45.6° in X-ray diffraction (XRD) analysis using Cu Kα radiation.

Fig. 1

**Description**

BACKGROUND OF THE INVENTION

Field of the Invention

The present invention relates to a lithium composite oxide and a positive electrode active material for secondary batteries containing the same and more particularly, to a positive electrode active material having a controlled ratio of a max peak intensity at $2\Theta$ (theta) = 44.75° to 44.80° and a max peak intensity at $2\Theta$ (theta) = 45.3° to 45.6°, in the result of X-ray diffraction (XRD) analysis using Cu K$\alpha$ radiation.

The present invention also relates to a bimodal-type positive electrode active material in which large particles and small particles, each having a controlled grain boundary density, are mixed together, the bimodal-type positive electrode active material having the controlled ratio of max peak intensity.

Description of the Related Art

The development of portable mobile electronic devices such as cellular phones, MP3 players, and tablets has brought about an explosive increase in demand for secondary batteries capable of storing electrical energy. In particular, with the advent of electric vehicles, medium- and large-sized energy storage systems, and portable devices requiring high energy density, the demand for lithium secondary batteries is increasing.

The lithium composite oxide for a positive electrode active material that has recently been most in the spotlight is lithium nickel manganese cobalt oxide having the formula $Li(Ni_xCo_yMn_z)O_2$ (wherein x, y, and z are atomic fractions of independent oxide composition elements and satisfy $0<x\leq1$, $0<y\leq1$, and $0<z\leq1$, with the proviso of $0<x+y+z\leq1$). This positive electrode active material has advantages of high capacity due to operation at a higher voltage than $LiCoO_2$, which has been actively researched and used as a positive electrode active material, and of low price due to lower Co content.

However, in particular, a high-nickel positive electrode active material with an increased nickel content to 50 mol% or more to realize high capacity has a problem in that battery characteristics rapidly deteriorate even at room temperature as well as at high temperature when structural instability is caused by cation mixing as the nickel content increases.

SUMMARY OF THE INVENTION

Therefore, the present invention has been made in view of the above problems, and it is one object of the present invention to provide a positive electrode active material that is capable of greatly improving DC-IR characteristics, capacity characteristics, output characteristics, and lifespan characteristics of batteries by controlling a ratio of a max peak intensity at $2\Theta$ (theta) = 44.75° to 44.80° to a max peak intensity at $2\Theta$ (theta) = 45.3° to 45.6° when coating lithium composite oxide.

In accordance with the present invention, the above and other objects can be accomplished by the provision of a positive electrode active material including a first lithium composite oxide particle including a secondary particle formed by aggregation of one or more primary particles, and a coating oxide occupying at least a part of at least one of surfaces of the secondary particle, grain boundaries between the primary particles, and surfaces of the primary particles, the positive electrode active material satisfying an equation of $1.3 \leq a/b \leq 3.0$, wherein a represents a max peak intensity at 2theta = 44.75° to 44.80° and b represents a max peak intensity at 2theta = 45.3° to 45.6° in X-ray diffraction (XRD) analysis using Cu K$\alpha$ radiation.

In an embodiment, the positive electrode active material may satisfy an equation of $400 \leq a \leq 1,200$.

In an embodiment, the positive electrode active material may satisfy an equation of $150 \leq b \leq 500$.

In an embodiment, the coating oxide may be represented by Formula 3 below:

$$[\text{Formula 3}] \qquad Li_pM3_qO_r$$

wherein M3 includes at least one selected from the group consisting of Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Gd, and Nd, and p, q, and r satisfy $0\leq p\leq10$, $0<q\leq8$, and $2\leq r\leq13$, respectively.

In an embodiment, a grain boundary density calculated in accordance with the following Equation 1 on primary particles placed on a straight line crossing the center of the secondary particle and a grain boundary between the primary particles in a uniaxial direction in a cross-sectional SEM image of the secondary particle obtained with a scanning electron microscope (SEM) may be 0.85 or more:

[Equation 1]

$$\text{Grain boundary density} = \text{number of grain boundaries between primary particles placed on straight line/number of primary particles placed on straight line}$$

In an embodiment, the positive electrode active material may further include a second lithium composite oxide particle including a secondary particle formed by aggregation of one or more primary particles, and a coating oxide occupying at least a part of at least one of surfaces of the secondary particle of the second lithium composite oxide particles, grain boundaries between the primary particles, or surfaces of the primary particles, wherein the first lithium composite oxide particles in the positive electrode active material have an average diameter (D50) of 8 um or more, and the second lithium composite oxide particles in the positive electrode active material have an average diameter (D50) of 7 um or less.

In an embodiment, the second lithium composite oxide particle may have a grain boundary density of 0.95 or less.

In an embodiment, the positive electrode active material may have a w1/w2 of 1.5 to 9.0, wherein w1 represents a weight of the first lithium composite oxide particles included in the positive electrode active material and w2 represents a weight of the second lithium composite oxide particles included in the positive electrode active material.

In accordance with another aspect of the present invention, provided is a positive electrode including the positive electrode active material.

In accordance with another aspect of the present invention, provided is a secondary battery including the positive electrode.

BRIEF DESCRIPTION OF THE DRAWINGS

The above and other objects, features and other advantages of the present invention will be more clearly understood from the following detailed description taken in conjunction with the accompanying drawings, in which:

FIG. 1 shows the result of X-ray diffraction (XRD) analysis using Cu K$\alpha$ radiation for a positive electrode active material according to an embodiment of the present invention; and

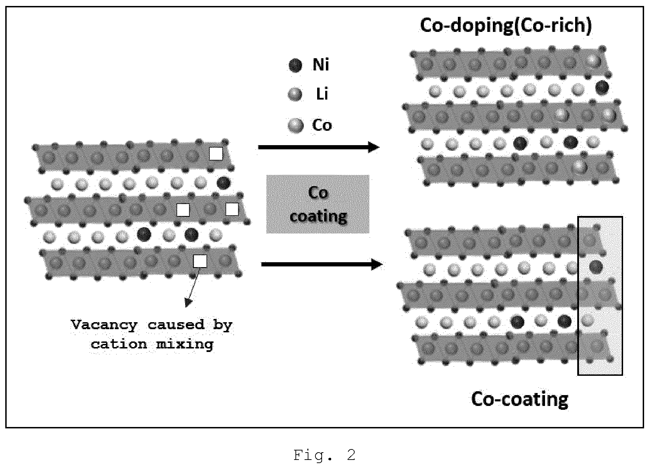

FIG. 2 shows Co doping and Co coating by cation mixing.

DETAILED DESCRIPTION OF THE INVENTION

As used herein, terms such as "comprising" are to be understood as open-ended terms that encompass the possibility of including other configurations.

As used herein, the terms "preferred" and "preferably" refer to embodiments of the present invention that may provide specific advantages under certain circumstances. However, these terms are not intended to exclude other embodiments from the scope of the present invention.

Also, the singular forms used in the specification and appended claims may be intended to include plural forms as well, unless the context dictates otherwise.

That is, the technical features of any one particle may mean the technical features of a plurality of particles, and the average technical features of a plurality of particles may be intended.

Meanwhile, the technical features described below relate to aspects to obtain the desired effects of the present invention described above.

That is, the positive electrode active material according to one aspect of the present invention can greatly improve DC-IR characteristics, capacity characteristics, output characteristics, and lifespan characteristics of batteries based on the technical characteristics according to one embodiment described below.

Here, lithium composite oxide is distinguished from coating oxide.

When the lithium composite oxide particle according to one aspect of the present invention are coated, a portion of the coating elements may be present in the lattice structure of the primary particles contained in the lithium composite oxide particle. This is expressed as the coating element being doped into the lithium composite oxide particle and the lithium composite oxide is defined to encompass all of the doped regions.

In another aspect, when the lithium composite oxide particle according to one aspect of the present invention is coated, a portion of the coating element may form coating oxide. The coating oxide occupies at least a part of at least one of surfaces of the secondary particle contained in the lithium composite oxide particle, grain boundaries between primary particles, or surfaces of the primary particles.

The positive electrode active material according to an aspect of the present invention includes a first lithium composite oxide particle including a secondary particle formed by aggregation of one or more primary particles.

When the secondary particle is composed of one primary particle, the secondary particle may be the primary particle itself.

In one embodiment, the primary particle may include one or more crystallites.

In one embodiment, the first lithium composite oxide particle may be in the form of single-particulate including one primary particle and may be in the form of single-crystal when the primary particle is composed of one crystallite.

In another embodiment of the present invention, the first lithium composite oxide particle may be in the form of a multi-particulate or poly-crystal including two or more primary particles. More preferably, the first lithium composite oxide particle may be in the form of a multi-particulate or poly-crystal including an aggregate of 20 or more primary particles.

In a further preferred embodiment, the first lithium composite oxide particle may have a grain boundary density of 0.85 or more or 0.90 or more.

As used herein, the grain boundary density is calculated in accordance with the following Equation 1 on the primary particles placed on a straight line crossing the center of a secondary particle in a uniaxial direction in a cross-sectional SEM image of lithium composite oxide obtained with a scanning electron microscope (SEM) after cross-sectioning a secondary particle:

[Equation 1]

$$\text{Grain boundary density} = \text{number of grain boundaries between primary particles placed on straight line/number of primary particles placed on straight line}$$

For example, the grain boundary density of a non-aggregated single-particulate particle composed of one primary particle calculated in accordance with Equation 1 may be zero. In addition, when two primary particles are aggregated, the grain boundary density thereof calculated in accordance with Equation 1 may be 0.5.

At this time, the grain boundary density means an average of grain boundary densities obtained from 10 arbitrary straight lines.

The average particle size of the first lithium composite oxide particles in the positive electrode active material may be 1 um to 30 $\mu$m, more preferably 8 um to 20 um.

Meanwhile, as used herein, the term "average particle size" means an average diameter (D50) when the particles are spherical and means a length of an average long axis when the particles are non-spherical. The particle size may be measured using a particle size analyzer (PSA).

The present invention may provide a unimodal-type positive electrode active material.

In addition, in another further preferable embodiment, the positive electrode active material may be a bimodal-type positive electrode active material further including the second lithium composite oxide particle including a secondary particle formed by aggregation of one or more primary particles, in addition to the first lithium composite oxide particle.

When the positive electrode active material further includes the second lithium composite oxide particle, the first lithium composite oxide particle is distinguished from the second lithium composite oxide particle in that they have different average particle diameters. More specifically, the first lithium composite oxide particles in the positive electrode active material have an average diameter (D50) of 8 um or more, more preferably 10 to 20 um, whereas the second lithium composite oxide particles in the positive electrode active material may have an average diameter (D50) of 7 um or less, more preferably 1 to 5.0 $\mu$m.

The positive electrode active material according to one embodiment of the present invention may be of a bimodal-type in which large particles are mixed with small particles, and may have an increasing energy density per unit volume as small particles are positioned in voids between large particles. However, such a bimodal type may have increased variation in average particle diameter or deteriorated impedance and lifespan characteristics due to firing.

In an embodiment of the present invention, by controlling the Ni vacancies in the lithium composite oxide lattice structure in a bimodal-type positive electrode active material, it is possible to increase the energy density due to the small particles positioned in voids between large particles and solve the problem of deterioration in battery characteristics due to the change in variation in particle diameter.

In a more preferred embodiment, when the weight of the first lithium composite oxide particles included in the positive electrode active material is referred to as "w1" and the weight of the second lithium composite oxide particles included in the positive electrode active material is referred to as "w2", w1/w2 is 1.5 to 9.0, more preferably 2.3 to 4.

That is, the first particles and the second particles may be mixed in a ratio of 6:4 to 9:1, more preferably 7:3 to 8:2. In the present invention, by adjusting the Ni vacancies in the lithium composite oxide lattice structure in a bimodal-type positive electrode active material having such a mixing ratio, it is possible to increase the energy density due to the small particles positioned in voids between large particles and solve the problem of deterioration in battery characteristics due to the change in variation in particle diameter.

The second lithium composite oxide particle according to one embodiment of the present invention may be in the form of single-particulate including one primary particle and may be in the form of single-crystal when the primary particle is composed of one crystallite.

In another embodiment of the present invention, the second lithium composite oxide particle may be in the form of multi-particulate or poly-crystal including two or more primary particles.

In addition, in a further preferred embodiment, the grain boundary density of the second lithium composite oxide particle in the bimodal type positive electrode active material is 0.95 or less, 0.90 or less, 0.85 or less, 0.80 or less, 0.75 or less, 0.70 or less, 0.65 or less, 0.60 or less, 0.55 or less, or 0.5 or less.

The lithium composite oxide according to one embodiment of the present invention may be a lithium nickel-based composite oxide containing lithium and nickel.

In one embodiment, the lithium nickel-based composite oxide may be high-nickel-based lithium composite oxide containing nickel in an amount of 0.5 mol% or more, 0.6 mol% or more, 0.7 mol% or more, 0.8 mol% or more, or 0.9 mol% or more, based on the total molar content of the transition metal.

In one embodiment, the lithium composite oxide may be a lithium nickel-based composite oxide containing lithium, nickel, and aluminum.

In one embodiment, the lithium composite oxide may be a lithium nickel composite oxide containing lithium, nickel, and manganese.

In an embodiment, the lithium composite oxide may be represented by Formula 1 below.

[Formula 1] $\quad Li_aNi_xCo_yM_{1-x-y}O_2$

wherein M is selected from the group consisting of Al, Mn, B, Ba, Ce, Cr, F, Mg, V, Ti, Fe, Zr, Zn, Si, Y, Nb, Ga, Sn, Mo, W, P, Sr and combinations thereof, and a, x and y satisfy $0.9 \leq a \leq 1.3$, $0.6 \leq x \leq 1.0$, and $0.0 \leq y \leq 0.4$, respectively, with the proviso that $0.0 \leq 1-x-y \leq 0.4$.

In an embodiment, the lithium composite oxide may be represented by Formula 2 below.

[Formula 2] $\quad Li_{a'}Ni_{x'}Co_{y'}M1_{z'}M2_{1-x'-y'-z'}O_2$

wherein M1 is Al or Mn, M2 is selected from the group consisting of B, Ba, Ce, Cr, F, Mg, V, Ti, Fe, Zr, Zn, Si, Y, Nb, Ga, Sn, Mo, W, P, Sr and combinations thereof, and a', x' y' and z' satisfy $0.9 \leq a' \leq 1.3$, $0.6 \leq x' \leq 1.0$, $0.0 \leq y' \leq 0.4$, and $0.0 \leq z' \leq 0.4$, with the proviso that $0.0 \leq 1-x'-y'-z' \leq 0.4$.

In addition, the positive electrode active material according to one embodiment of the present invention includes coating oxide that occupies at least a part of at least one of surfaces of the secondary particle, grain boundaries between primary particles, or surfaces of primary particles.

In an embodiment, the coating oxide may be represented by Formula 3 below:

[Formula 3] $\quad Li_pM3_qO_r$

wherein M3 includes at least one selected from the group consisting of Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Gd and Nd, and p, q, and r satisfy $0 \leq p \leq 10$, $0 < q \leq 8$, and $2 \leq r \leq 13$, respectively.

For example, in Formula 3, M3 may represent a coating element, and the coating oxide may be a composite oxide of lithium and an element represented by M3, or an oxide of M3.

For example, the coating oxide may be $Li_pCo_qO_r$, $Li_pW_qO_r$, $Li_pZr_qO_r$, $Li_pTi_qO_r$, $Li_pNi_qO_r$, $Li_pAl_qO_r$, $Li_pMo_qO_r$, $Co_qO_r$, $Al_qO_r$, $W_qO_r$, $Zr_qO_r$, $Ti_qO_r$, $B_qO_r$, $Li_p(W/Ti)_qO_r$, $Li_p(W/Zr)_qO_r$, $Li_p(W/Ti/Zr)_qO_r$, or $Li_p(W/Ti/B)_qO_r$, but is not limited thereto.

In a more preferred embodiment, the coating oxide is $Li_{p'}Co_{q'}O_{r'}$ (wherein p', q' and r' satisfy $0 \leq p' \leq 10$, $0 < q' \leq 8$, and $2 \leq r' \leq 13$, respectively).

Also, in a further preferable embodiment, the coating oxide may include $LiCoO_2$.

When the coating oxide occupies at least a part of the surface of the primary particle, the surface of the primary particle may be a surface portion of the primary particle constituting the outermost periphery of the secondary particle, or a surface portion of the primary particle not constituting the outermost periphery of the secondary particle.

Here, the surface portion of the primary particle constituting the outermost periphery of the secondary particle may be interpreted as the same meaning as the surface of the secondary particle.

The coating oxide may include a concentration gradient portion in which a molarity of an element included in the coating oxide is changed. For example, when the coating oxide includes lithium, the molarity of lithium may be changed. Also, for example, the molarity of one or more of M3 included in the coating oxide may be changed.

In one embodiment, when the coating oxide occupies at least a part of the surface region of the primary particle constituting the outermost periphery of the secondary particle, the concentration gradient may decrease, increase, or increase then decrease in the direction toward the center of the secondary particle from the surface of the primary particle constituting the outermost periphery of the secondary particle.

In addition, the concentration gradient may decrease, increase, or increase then decrease in the direction toward the center of the primary particle from the surface of the primary particle constituting the outermost periphery of the secondary particle.

In one embodiment, when the coating oxide occupies at least a part of the surface portion of the primary particle that does not form the outermost periphery of the secondary particle, it may decrease, increase, or increase then decrease in the direction toward the center of the primary particle from the surface of the primary particle.

In the present invention, X-ray diffraction (XRD) analysis was performed at a step size of 0.01°/step for a measurement time/step of 0.1 s/step using a Bruker D8 Advance diffractometer using Cu K$\alpha$ radiation (1.540598Å).

In the present invention, the max peak intensity means a maximum value of the peak in the corresponding region.

The max peak intensity appearing at 2theta = 44.75° to 44.80° obtained as a result of X-ray diffraction (XRD) analysis using Cu K$\alpha$ radiation is referred to as "a". In one embodiment, a may be a max peak intensity appearing at 2theta of 44.80°.

The max peak intensity "a" used herein is obtained by subtracting the correction value of the background from the max peak intensity before correction appearing in 2theta = 44.75° to 44.80°, wherein the correction value of the background is an average of the diffraction peak intensity in the flat section in the range of 2theta = 30° to 50°.

The max peak intensity appearing at 2theta = 45.3° to 45.6° obtained as a result of X-ray diffraction (XRD) analysis using Cu K$\alpha$ radiation is referred to as "b".

In one embodiment, the max peak intensity "b" is obtained by subtracting the correction value of the background from the max peak intensity before correction appearing in 2theta = 45.3° to 45.6°, wherein the correction value of the background is an average of the diffraction peak intensity in the flat section in the range of 2Theta = 30° to 50°.

In this case, a/b, which indicates the ratio of the max peak intensity a to the max peak intensity b, may be 1.3 or more, 1.5 or more, 3.0 or less, or 2.5 or less. The inventors of the present invention found that, when a/b, which indicates the ratio of the max peak intensity a to the max peak intensity b, is adjusted to $1.3 \leq a/b \leq 3.0$, more preferably $1.5 \leq a/b \leq 2.5$, output characteristics and life characteristics are greatly improved.

The max peak intensity an appearing at 2theta = 44.75° to 44.80° may be due to the phase of the region rich in the coating element, which is partially present in the primary particles, by which the coating element is doped into the lattice structure of the primary particles included in the lithium composite oxide particle during the coating treatment of the lithium composite oxide particle.

More specifically, cation mixing is caused by $Ni^{2+}$ in the primary particles included in the lithium composite oxide particle containing nickel, thus leading to Ni vacancies in the lithium composite oxide lattice structure. In particular, such cation mixing may occur readily in a high-nickel positive electrode active material. In this case, when the lithium composite oxide particle is coated, the coating element is easily doped into Ni vacancies in the lattice structure, thus causing formation of a region where the coating element is partially rich.

The max peak intensity b at 2theta = 45.3° to 45.6° may be due to the coating oxide formed by coating the lithium composite oxide particle.

The Ni vacancy may be controlled by the manufacturing process according to one aspect of the present invention.

The coating oxide according to one embodiment of the present invention can improve the output characteristics of the battery due to the high ion conductivity thereof and improve the lifespan of the battery by protecting the surface of the positive electrode active material. In addition, the coating oxide can effectively reduce residual lithium present on the surface of the lithium composite oxide and prevent side reactions caused by unreacted residual lithium.

However, when the doping amount of the coating element is greatly reduced, the lifespan of the battery may deteriorate due to electrolyte reaction of $Ni^{4+}$ resulting from the excessive Ni in the lattice structure of the lithium composite oxide.

Accordingly, the present invention provides a positive electrode active material that can most improve battery characteristics by controlling the degree of doping of coating elements and formation of coating oxide.

The ratio a/b can be controlled by adjusting Ni vacancies in the lithium composite oxide lattice and the Ni vacancies can be controlled by adjusting cleaning and coating processes, as will be described later.

In a further preferred embodiment, the max peak intensity "a" may be 400 or more, 450 or more, 1,200 or less or 1,000 or less.

In a further preferred embodiment, the max peak intensity b may be 150 or more, 200 or more, 250 or more, or 500 or less.

The positive electrode active material of the present invention may include the first lithium composite oxide particles, the coating oxide thereof, and/or the second lithium composite oxide particles and the coating oxide thereof, each having the technical features described above.

In addition, the technical features of the first lithium composite oxide particles, the coating oxide, and/or second lithium composite oxide particles and the coating oxide thereof may relate to average characteristics of a plurality of particles.

Meanwhile, the meaning of "≤", "not less than" or "not more than" described herein may be interchangeable with the meaning of "<", "more than" or "less than".

The manufacturing method of the positive electrode active material of the present invention is not limited to the manufacturing method as long as it has the technical features described above. However, in a further preferred embodiment, the positive electrode active material may be manufactured as follows.

In particular, in a manufacturing embodiment of the present invention, the coating process may be performed at a pH of 11 to 13. Before mixing the coating compound after preparing the lithium composite oxide, a cleaning solution is added to the prepared lithium composite oxide, NaOH is added to the cleaning solution in an amount of 1.1 to 3.4 wt%, 1.3 to 3.2 wt%, or 1.5 to 3.0 wt%, based on the total weight of the lithium composite oxide, and then a cleaning process is performed.

In an embodiment, the cleaning solution may be distilled water or alcohol, more preferably distilled water.

According to the present invention, Ni vacancies can be controlled by controlling the size, uniformity, and coprecipitation speed of coprecipitated particles depending on the amount of NaOH added to the cleaning solution before mixing with the coating compound.

When the amount of NaOH in the cleaning solution is excessively low, the coprecipitation may not occur well or the coprecipitated particles may be excessively small and thus a/b may be less than 1.3.

In addition, when the amount of NaOH in the cleaning solution is excessively high, the particles of the coating compound to be mixed become excessively large and thus a/b may exceed 3.0.

In addition, in a manufacturing embodiment of the present invention, the ratio a/b is adjusted by controlling the content of the coating compound, heat treatment temperature and reaction time, and the like, in addition to the above manufacturing process.

In a manufacturing step according to a further specific embodiment, first, hydroxide precursor particles are prepared.

When a bimodal-type positive electrode active material is intended to be prepared, the hydroxide precursors are prepared in two forms of large particles and small particles having different particle sizes.

Then, the prepared hydroxide precursor particles are oxidized to prepare an oxide precursor.

Then, the oxide precursor is mixed with a lithium compound, followed by heat-treatment, to prepare a lithium composite oxide.

In an embodiment, the heat treatment may be performed by mixing the oxide precursor with the lithium compound, elevating the temperature to 750 to 850°C at a rate of 1 to 3°C/minute, and performing heat treatment for 10 to 14 hours.

In addition, in one embodiment, during this process, a compound selected from B, Ba, Ce, Cr, F, Mg, Al, V, Ti, Fe, Zr, Zn, Si, Y, Nb, Ga, Sn, Mo, W, P and Sr may also be subjected to heat treatment.

Then, a cleaning solution is added to the prepared lithium composite oxide and NaOH is added to the cleaning solution in an amount of 1.1 to 3.4% by weight, based on the total weight of the lithium composite oxide.

Then, a coating process is performed while stirring after adding an aqueous solution-type coating compound in an amount of 2.5 to 10.0 mol%, based on the content of the coating element in the coating compound with respect to the total amount of metal elements excluding lithium.

Then, the coated lithium composite oxide is dried at 100 to 140°C, the temperature is elevated to 650 to 750°C at a rate of 1 to 3°C/min, and heat-treatment is performed for 10 to 14 hours to prepare a positive electrode active material.

In another aspect, the present invention provides a positive electrode according including the positive electrode active material.

The positive electrode is manufactured to have a known structure in accordance with a known manufacturing method, except that the positive electrode active material is used. The binder, conductive material, and solvent are not particularly limited as long as they can be used for a positive electrode current collector for secondary batteries.

In another aspect, the present invention provides a secondary battery including the positive electrode active material.

Specifically, the secondary battery may include a positive electrode, a negative electrode positioned opposite to the positive electrode, and an electrolyte between the positive electrode and the negative electrode, but the configuration thereof is not particularly limited thereto as long as it can be used as a secondary battery.

Hereinafter, embodiments of the present invention will be described in more detail.

## Manufacture of positive electrode active material

### <Example 1>

(a) A NiCoAl(OH)$_2$ hydroxide precursor (Ni:Co:Al = 95:4:1 (at%)) was synthesized in the form of large and small particles in accordance with a known co-precipitation method using nickel sulfate, cobalt sulfate and aluminum sulfate. The synthesized NiCoAl(OH)$_2$ hydroxide precursor was heated at 2°C/minute and was converted into an oxide precursor by oxidation based on firing at 400°C for 6 hours.
The average particle diameter (D50) of the large particle oxide precursor was 15.0 um and the average particle diameter (D50) of the small particle oxide precursor was 3.0 um.
(b) The large and small particle oxide precursors prepared in step (a) were weighed at a weight ratio of 80:20, LiOH (Li/(Ni + Co + Al) molar ratio = 1.05) was added thereto, followed by mixing and heat-treatment under an O$_2$ atmosphere in a furnace at a rate of 800°C/minute for 12 hours to obtain a lithium composite oxide.
(c) Distilled water was added to the prepared lithium composite oxide and NaOH was added in an amount of 1.5 wt% with respect to the lithium composite oxide. Then, a 5.0 wt% aqueous cobalt sulfate solution was added so that the cobalt derived from the cobalt sulfate aqueous solution was adjusted to 3.0 mol% of the metal elements (Ni+Co+Al) excluding lithium among the intermediate products while stirring to coat the surface of the lithium composite oxide particles. After completion of the reaction, the reaction product was dried at 120°C for 12 hours.
(d) The dried product was heated to 700°C at 2°C/min while maintaining an O$_2$ atmosphere in a furnace, and heat-treated at 700°C for 12 hours to obtain a positive electrode active material.

### <Example 2>

A positive electrode active material was obtained in the same manner as in Example 1, except that NaOH was added in an amount of 2.0 wt% with respect to the lithium composite oxide in step (c).

### <Example 3>

A positive electrode active material was obtained in the same manner as in Example 1, except that NaOH was added in an amount of 2.5 wt% with respect to the lithium composite oxide in step (c).

### <Example 4>

A positive electrode active material was obtained in the same manner as in Example 1, except that NaOH was added in an amount of 3.0 wt% with respect to the lithium composite oxide in step (c).

### <Example 5>

A positive electrode active material was obtained in the same manner as in Example 1, except that the large and small particle oxide precursors were weighed in a weight ratio of 80:20 in step (b), and LiOH (Li/(Ni+Co+Al) molar ratio = 1.05) was mixed with H$_3$BO$_3$ (B/(Ni+Co+Al) molar ratio = 0.015), followed by heat treatment.

### <Example 6>

A positive electrode active material was obtained in the same manner as in Example 1, except that the large and small particle oxide precursors were weighed in a weight ratio of 80:20 in step (b), and LiOH (Li/(Ni+Co+Al) molar ratio = 1.05) was mixed with Zr(OH)$_4$ (Zr/(Ni+Co+Al) molar ratio = 0.005), followed by heat treatment.

### <Comparative Example 1>

A positive electrode active material was obtained in the same manner as in Example 1, except that NaOH was added in an amount of 1.0 wt% with respect to the lithium composite oxide in step (c).

### <Comparative Example 2>

A positive electrode active material was obtained in the same manner as in Example 1, except that NaOH was added in an amount of 0.5 wt% with respect to the lithium composite oxide in step (c).

### <Comparative Example 3>

A positive electrode active material was obtained in the same manner as in Example 1, except that NaOH was added in an amount of 3.5 wt% with respect to the lithium composite oxide in step (c).

### <Comparative Example 4>

A positive electrode active material was obtained in the same manner as in Example 1, except that NaOH was added in an amount of 4.0 wt% with respect to the lithium composite oxide in step (c).

### Manufacture of lithium secondary battery

92 wt% of each of the positive electrode active materials prepared according to Examples and Comparative Examples, 4 wt% of artificial graphite, and 4 wt% of a PVDF binder were dispersed in 30 g of N-methyl-2 pyrrolidone (NMP) to prepare a positive electrode slurry. An aluminum thin film having a thickness of 15 um was uniformly coated with the positive electrode slurry, followed by vacuum drying at 135°C to prepare a positive electrode for a lithium secondary battery.

A coin battery was manufactured using lithium foil as a counter electrode for the positive electrode using a porous polyethylene film (Celgard 2300, thickness: 25 um) as a separator and an electrolyte solution of 1.15 M $LiPF_6$ in a solvent containing ethylene carbonate and ethyl methyl carbonate mixed in a volume ratio of 3:7.

### <Experimental Example 1> Measurement of max peak intensity

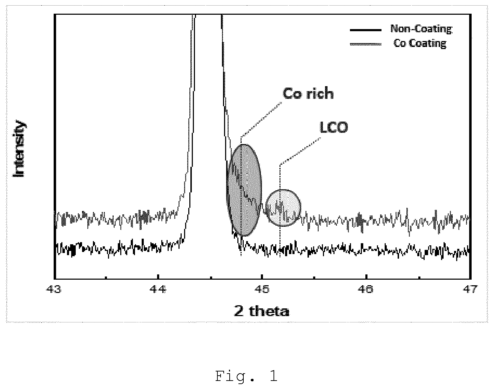

The results of X-ray diffraction (XRD) analysis are shown in FIG. 1. The max peak intensity a at 2theta = 44.75° to 44.80° and the max peak intensity b at 2theta = 45.3° to 45.6° were measured on each of the positive electrode active materials according to Examples and Comparative Examples, the ratio of a/b was calculated, and the results are shown in Table 1 below.

X-ray diffraction (XRD) analysis was performed at a step size of 0.01°/step for a measurement time/step of 0.1 s/step using a Bruker D8 Advance diffractometer using Cu K$\alpha$ radiation (1.540598Å). The max peak intensity was obtained by subtracting the correction value of the background, which is an average of the diffraction peak intensity in the flat section in the range of 2theta = 30° to 50°, from the measured max peak intensity.

<Table 1>

|  | a Intensity | b Intensity | R (a/b) |
|---|---|---|---|
|  | a. u. | a. u. | - |
| Example 1 | 466.5 | 264.1 | 1.8 |
| Example 2 | 502.7 | 233.9 | 2.1 |
| Example 3 | 630.9 | 401.6 | 1.6 |
| Example 4 | 971.8 | 489.4 | 2.0 |
| Example 5 | 895.4 | 403.6 | 2.2 |
| Example 6 | 570.6 | 280.6 | 2.0 |
| Comparative Example 1 | 997.3 | 230.4 | 4.3 |
| Comparative Example 2 | 441.9 | 401.9 | 1.1 |
| Comparative Example 3 | 554.6 | 150.6 | 3.7 |
| Comparative Example 4 | 620.7 | 587.1 | 1.1 |

### <Experimental Example 2> DC-IR characteristic evaluation

The lithium secondary batteries according to Examples and Comparative Examples, which had been charged and discharged at 25°C, were charged at SOC of 100% and stored at 60°C for 7 days, and then resistance was measured.

The result is shown in Table 2 below.

<Table 2>

|  | DC-IR after life |
| --- | --- |
|  | Ω |
| Example 1 | 15.01 |
| Example 2 | 16.09 |
| Example 3 | 14.89 |
| Example 4 | 15.48 |
| Example 5 | 15.77 |
| Example 6 | 15.40 |
| Comparative Example 1 | 19.11 |
| Comparative Example 2 | 17.94 |
| Comparative Example 3 | 19.01 |
| Comparative Example 4 | 17.48 |

**<Experimental Example 3> Initial charge capacity, initial discharge capacity, and charge and discharge efficiency**

A charge/discharge test was conducted at 25°C, a voltage of 3.0 V to 4.25 V, and a discharge rate of 0.2C on each of the lithium secondary batteries according to Examples and Comparative Examples using an electrochemical analyzer (Toyo, Toscat-3100).
The measured initial charge capacity, initial discharge capacity, and charge/discharge efficiency are shown in Table 3 below.

<Table 3>

|  | Charge capacity | Discharge capacity | Efficiency |
| --- | --- | --- | --- |
|  | mAh/g | mAh/g | % |
| Example 1 | 233.6 | 206.9 | 88.6 |
| Example 2 | 234.5 | 207.3 | 88.4 |
| Example 3 | 235.7 | 206.7 | 87.7 |
| Example 4 | 234.0 | 207.0 | 88.5 |
| Example 5 | 233.9 | 207.0 | 88.5 |
| Example 6 | 233.9 | 207.1 | 88.5 |
| Comparative Example 1 | 232.5 | 205.4 | 88.3 |
| Comparative Example 2 | 231.9 | 205.4 | 88.6 |
| Comparative Example 3 | 232.0 | 204.9 | 88.3 |
| Comparative Example 4 | 231.7 | 205.0 | 88.5 |

**<Experimental Example 4> Evaluation of output characteristics**

The lithium secondary batteries according to Examples and Comparative Examples were charged and discharged at 25°C and a voltage of 3.0V to 4.25V using an electrochemical analyzer (Toyo, Toscat-3100).
The measured rate capability (C-rate) is shown in Table 4 below.

<Table 4>

|  | Output 0.2C/2.OC | Output 0.2C/4.OC |
|---|---|---|
|  | % | % |
| Example 1 | 94.0 | 91.5 |
| Example 2 | 94.2 | 91.3 |
| Example 3 | 94.6 | 91.4 |
| Example 4 | 94.1 | 91.4 |
| Example 5 | 94.2 | 91.2 |
| Example 6 | 94.3 | 91.4 |
| Comparative Example 1 | 93.1 | 89.4 |
| Comparative Example 2 | 92.7 | 89.6 |
| Comparative Example 3 | 92.8 | 89.4 |
| Comparative Example 4 | 93.0 | 89.0 |

**<Experimental Example 5> Evaluation of lifespan characteristics**

Each of the lithium secondary batteries according to Examples and Comparative Examples was charged and discharged 50 times under the condition of 1C/1C at 60°C within a driving voltage range of 3.0 V to 4.35 V, the 50th cycle capacity retention rate compared to the initial capacity was measured and the result is shown in Table 5 below.

<Table 5>

|  | Lifespan |
|---|---|
|  | % |
| Example 1 | 88.6 |
| Example 2 | 88.4 |
| Example 3 | 88.7 |
| Example 4 | 88.6 |
| Example 5 | 88.4 |
| Example 6 | 88.4 |
| Comparative Example 1 | 82.1 |
| Comparative Example 2 | 81.9 |
| Comparative Example 3 | 80.9 |
| Comparative Example 4 | 81.5 |

As apparent from the foregoing, the positive electrode active material of the present invention has an effect of greatly improving DC-IR characteristics, capacity characteristics, output characteristics and lifespan characteristics of a battery.

In addition, the positive electrode active material of the present invention has another effect of efficiently solving problems of increased deviation in average particle diameter or deterioration in impedance and lifespan due to simultaneous firing of large and small particles.

Although the preferred embodiments of the present invention have been disclosed, those skilled in the art will appreciate that various modifications, additions and substitutions are possible, without departing from the scope and spirit of the invention as disclosed in the accompanying claims.

**Claims**

1. A positive electrode active material comprising:

   a first lithium composite oxide particle including a secondary particle formed by aggregation of one or more primary particles; and
   a coating oxide occupying at least a part of at least one of surfaces of the secondary particle, grain boundaries between the primary particles, or surfaces of the primary particles,
   the positive electrode active material satisfying an equation of $1.3 \leq a/b \leq 3.0$,
   wherein a represents a max peak intensity at 2theta = 44.75° to 44.80° and b represents a max peak intensity at 2theta = 45.3° to 45.6° in X-ray diffraction (XRD) analysis using Cu K$\alpha$ radiation.

2. The positive electrode active material according to claim 1, wherein the positive electrode active material satisfies an equation of $400 \leq a \leq 1,200$.

3. The positive electrode active material according to claim 1, wherein the positive electrode active material satisfies an equation of $150 \leq b \leq 500$.

4. The positive electrode active material according to claim 1, wherein the coating oxide is represented by Formula 3 below:

   [Formula 3]        $Li_pM3_qO_r$

   wherein M3 includes at least one selected from the group consisting of Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Gd, and Nd; and
   p, q, and r satisfy $0 \leq p \leq 10$, $0 < q \leq 8$, and $2 \leq r \leq 13$, respectively.

5. The positive electrode active material according to claim 1, wherein a grain boundary density calculated in accordance with the following Equation 1 on primary particles placed on a straight line crossing the center of the secondary particle and a grain boundary between the primary particles in a uniaxial direction in a cross-sectional SEM image of the secondary particle obtained with a scanning electron microscope (SEM) is 0.85 or more:

   [Equation 1]

   Grain boundary density = number of grain boundaries between primary particles placed on straight line/number of primary particles placed on straight line.

6. The positive electrode active material according to claim 1, further comprising:

   a second lithium composite oxide particle including a secondary particle formed by aggregation of one or more primary particles; and
   a coating oxide occupying at least a part of at least one of surfaces of the secondary particle of the second lithium composite oxide particle, grain boundaries between the primary particles, or surfaces of the primary particles,
   wherein the first lithium composite oxide particles in the positive electrode active material have an average diameter (D50) of 8 um or more, and
   the second lithium composite oxide particles in the positive electrode active material have an average diameter (D50) of 7 um or less.

7. The positive electrode active material according to claim 6, wherein the second lithium composite oxide particle has a grain boundary density of 0.95 or less.

8. The positive electrode active material according to claim 6, wherein the positive electrode active material has a w1/w2 of 1.5 to 9.0,

wherein w1 represents a weight of the first lithium composite oxide particles included in the positive electrode active material and w2 represents a weight of the second lithium composite oxide particles included in the positive electrode active material.

9. A positive electrode comprising the positive electrode active material according to claim 1.

10. A secondary battery comprising the positive electrode according to claim 9.

Fig. 1

Fig. 2

Europäisches
Patentamt

European
Patent Office

Office européen
des brevets

# EUROPEAN SEARCH REPORT

**Application Number**

EP 23 17 5387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 138 153 A2 (SAMSUNG SDI CO LTD [KR]) 22 February 2023 (2023-02-22) * paragraph [0019] * * example 1 * | 1-10 | INV. C01G53/00 H01M4/525 |
| X | US 2019/027739 A1 (KIM MINHAN [KR] ET AL) 24 January 2019 (2019-01-24) * example 1 * | 1-10 | |
| X | WO 2019/041788 A1 (NINGBO INSTITUTE OF MATERIALS TECH & ENGINEERING CHINESE ACADEMY OF SC) 7 March 2019 (2019-03-07) * paragraph [0042] – paragraph [0052] * * paragraph [0072] – paragraph [0079] * * example 1 * | 1-10 | |
| X | KR 2019 0127756 A (SUMITOMO CHEMICAL CO [JP]; TANAKA CHEMICAL CORP [JP]) 13 November 2019 (2019-11-13) * example 1 * | 1-10 | |
| X | CN 110 828 804 B (GUANGDONG INST RARE METALS) 11 May 2021 (2021-05-11) * examples * | 1-10 | **TECHNICAL FIELDS SEARCHED (IPC)** H01M C01G |
| X | CN 114 556 633 A (POINT TO TALK COMPANY POSCO ET AL.) 27 May 2022 (2022-05-27) * example 1 * | 1-10 | |
| X | US 2010/316910 A1 (KAJIYAMA AKIHISA [JP] ET AL) 16 December 2010 (2010-12-16) * examples * | 1-10 | |
| X | CN 115 132 978 A (SK ENERGY CO LTD) 30 September 2022 (2022-09-30) * example 1 * | 1-10 | |

-/--

The present search report has been drawn up for all claims

| Place of search | Date of completion of the search | Examiner |
|---|---|---|
| Munich | 13 March 2024 | Besana, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 23 17 5387

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 361 406 A (ECOPROL BM LTD COMPANY) 15 April 2022 (2022-04-15) * the whole document * ----- | 1-10 | |
| X | CN 111 952 590 A (HENAN KELONG NEW ENERGY CO LTD) 17 November 2020 (2020-11-17) * examples * ----- | 1-10 | |

| | TECHNICAL FIELDS SEARCHED (IPC) |
|---|---|

The present search report has been drawn up for all claims

| Place of search | Date of completion of the search | Examiner |
|---|---|---|
| Munich | 13 March 2024 | Besana, Sonia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 23 17 5387

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2024

| Patent document cited in search report | | | Publication date | Patent family member(s) | | Publication date |
|---|---|---|---|---|---|---|
| EP 4138153 | A2 | | 22-02-2023 | CN 115706226 A | | 17-02-2023 |
| | | | | EP 4138153 A2 | | 22-02-2023 |
| | | | | EP 4280305 A2 | | 22-11-2023 |
| | | | | KR 20230026161 A | | 24-02-2023 |
| | | | | US 2023074190 A1 | | 09-03-2023 |
| US 2019027739 | A1 | | 24-01-2019 | EP 3435453 A1 | | 30-01-2019 |
| | | | | US 2019027739 A1 | | 24-01-2019 |
| WO 2019041788 | A1 | | 07-03-2019 | CN 109428061 A | | 05-03-2019 |
| | | | | WO 2019041788 A1 | | 07-03-2019 |
| KR 20190127756 | A | | 13-11-2019 | CN 110461770 A | | 15-11-2019 |
| | | | | JP 6879803 B2 | | 02-06-2021 |
| | | | | JP 2018172257 A | | 08-11-2018 |
| | | | | KR 20190127756 A | | 13-11-2019 |
| | | | | WO 2018181530 A1 | | 04-10-2018 |
| CN 110828804 | B | | 11-05-2021 | NONE | | |
| CN 114556633 | A | | 27-05-2022 | CN 114556633 A | | 27-05-2022 |
| | | | | EP 4020630 A1 | | 29-06-2022 |
| | | | | JP 7416913 B2 | | 17-01-2024 |
| | | | | JP 2022546323 A | | 04-11-2022 |
| | | | | KR 20210023145 A | | 04-03-2021 |
| | | | | US 2022388852 A1 | | 08-12-2022 |
| | | | | WO 2021034020 A1 | | 25-02-2021 |
| US 2010316910 | A1 | | 16-12-2010 | CN 101855755 A | | 06-10-2010 |
| | | | | EP 2214234 A1 | | 04-08-2010 |
| | | | | JP 4462451 B2 | | 12-05-2010 |
| | | | | JP 5382343 B2 | | 08-01-2014 |
| | | | | JP 2009137834 A | | 25-06-2009 |
| | | | | JP 2010114088 A | | 20-05-2010 |
| | | | | KR 20100093034 A | | 24-08-2010 |
| | | | | US 2010316910 A1 | | 16-12-2010 |
| | | | | US 2013330626 A1 | | 12-12-2013 |
| | | | | WO 2009063613 A1 | | 22-05-2009 |
| CN 115132978 | A | | 30-09-2022 | CN 115132978 A | | 30-09-2022 |
| | | | | EP 4063328 A1 | | 28-09-2022 |
| | | | | KR 20220133512 A | | 05-10-2022 |
| | | | | US 2022311006 A1 | | 29-09-2022 |
| CN 114361406 | A | | 15-04-2022 | CN 114361406 A | | 15-04-2022 |
| | | | | EP 3985761 A1 | | 20-04-2022 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 17 5387

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2024

| Patent document cited in search report | Publication date | Patent family member(s) | | Publication date |
|---|---|---|---|---|
| | | JP | 7208313 B2 | 18-01-2023 |
| | | JP | 2022064841 A | 26-04-2022 |
| | | JP | 2023027385 A | 01-03-2023 |
| | | KR | 20220049178 A | 21-04-2022 |
| | | KR | 20230002194 A | 05-01-2023 |
| | | US | 2022115658 A1 | 14-04-2022 |
| | | US | 2024030435 A1 | 25-01-2024 |
| CN 111952590 A | 17-11-2020 | NONE | | |

EPO FORM P0459

For more details about this annex : see Official Journal of the European Patent Office, No. 12/82

page 2 of 2